# EUROPEAN PATENT APPLICATION

(11) **EP 4 534 772 A2**
(43) Date of publication of application: **09.04.2025**
(21) Application number: 23815356.3
(22) Date of filing: 31.05.2023
(51) Int. Cl.: E04C 2/22, E04C 2/36, E04C 2/38, E04C 2/52, E04B 1/80

(54) **PREFABRICATED INTERNAL ENCLOSURE ELEMENTS**

(30) Priority: 31.05.2022 ES 202230903 U; 21.10.2022 ES 202231735 U
(71) Applicant: Projectes Modulars Prefabricats, S.L., 25190 Lleida (ES)
(72) Inventor: PUJOL TORRENT, Montse, 25190 Lleida (ES); MANZANARES BARÓ, Gemma, 25190 Lleida (ES); MIEDES ALIAGA, Alvaro, 25190 Lleida (ES); FORNÉ I SAMITIER, Josep Oriol, 25190 Lleida (ES); GÒDIA MARTÍ, Joel, 25190 Lleida (ES); PÉREZ ORTEGA, Xavier, 25190 Lleida (ES)
(74) Representative: Balder IP Law, S.L.
(86) International application number: PCT/ES2023/070363
(87) International publication number: WO 2023/233059

(57) **Abstract**

The present invention relates to a prefabricated internal enclosure element (1, E, TD) comprising a structural frame (11) and an insulating layer (12) provided with a first face (121) and a second face (122), the first face (121) and/or the second face (122) comprising grooves and/or recesses (121S, 122S) for accommodating installations (IN), wherein the first face (121) and/or the second face (122) comprise grooves and/or recesses (121E) for accommodating the structural frame (11), and in that the element (1) comprises a first closure layer (C1) attached to the first face (121) and a second closure layer (C2) attached to the second face (122). The present invention also relates to a prefabricated panel (1') for forming false ceilings in buildings which comprises a structural framework (2') formed by a perimeter frame (2a") and longitudinal members (2b") and inner crosspieces (2c') interconnected together, and structural rods (11') to fasten the prefabricated panel (1') to a support outside the panel.

## Description

### TECHNICAL FIELD

The present invention relates to prefabricated internal enclosure elements and to buildings including these elements. In particular, the present invention focuses on flexible manufacturing methods the purpose of which is to construct different construction elements in one and the same manufacturing line according to variable manufacturing orders, for the subsequent construction of made-to-measure buildings. Furthermore, as a differentiating feature, these elements can be moved, relocated, and replaced subsequently throughout the life cycle of the building. The present invention also relates to prefabricated elements for forming internal enclosures in buildings, preferably for forming false ceilings, the object of the invention of which is to provide a prefabricated panel which allows the construction of false ceilings, integrating installations and ducts for water and air, as well as power lines.

### BACKGROUND

Most residential building construction continues to be performed today in much the same way as it has been throughout the last century, such that industrialization, which has reached other sectors, has not reached the construction sector as usual.

The sector is conditioned by intrinsic factors such as:
- Lack of training: the supply of skilled labor in construction is decreasing.
- Legislation and regulations: the legislation and regulations governing the sector are increasingly strict and require greater professionalism.
- Sustainable materials and processes: the need to search for more sustainable materials and processes, giving priority to full-cycle production chains to enhance the durability and recycling of the materials that make up the construction process.
- Construction costs: construction cost is becoming increasingly higher due to the foregoing, among other conditioning factors.

It is evident that some processes have improved due to the greater demand of regulations in the sector and to the optimization and improvement in the control of some of said processes.

But even today, most construction processes are expensive and deficient, and construction is still usually carried out in an artisanal manner and with a high degree of improvisation. The constructions performed today are very different from the way of producing everyday industrial products such as automobiles, household appliances, telephones, computers, etc.

To overcome these shortcomings, there are already known initiatives to move many manufacturing steps to the factory, as described for example in the duplicate document WO2011003143A1, which describes a building erected with prefabricated panels, and also the structure of these panels. The document also describes a method ranging from the input of data relating to the details of the panels, to their installation on construction site for the construction of a building. The method is intended for moving as many operations as possible to the factory, where manufacturing is less costly and panels can be constructed with higher quality and in better conditions. The data includes the dimensions of the panels, as well as the location of the openings that will serve as a housing for the services, i.e., cables. From the data, as described in this document, panels obtained by injection of expanded polystyrene in a mold are manufactured, the mold being partially formed by a structural frame that will surround the polystyrene, which will form an insulating layer. To give stability to the polystyrene, a retaining layer made of a mesh such as, for example, glass fiber, is attached, and then the mesh is covered with a coating layer. The panels obtained are intended to form the external enclosures of the building themselves, as well as the internal partitions.

Although the method used and the panel obtained allow several steps of the manufacturing method to be carried out in the factory, they have drawbacks that do not make them optimal.

First, the manufacturing method involves wet steps, specifically foam injection, which involves a lot of dirt and additional cleaning needs. Furthermore, as the inventors of the present application have been able to verify in practice, the drying time increases the process times, and what is even more serious, the change from liquid to solid state, until the final drying, causes volumetric changes which are difficult to control, and the final quality of the panel suffers.

These major drawbacks fail to optimize the manufacturing process described in the document, and even less so with the degree of regulatory requirements in Spain, or in Europe in general, in terms of tolerances, deviations, and dimensions.

### DESCRIPTION OF THE INVENTION

To overcome the drawbacks of the state of the art, a first aspect of the present invention proposes a prefabricated internal enclosure element comprising a structural frame and an insulating layer provided with a first face and a second face, the first face and/or the second face comprising grooves for accommodating installations and/or the structural frame, and in that the element comprises a first closure layer attached to the first face and a second closure layer attached to the second face.

The element of the invention allows solving the drawbacks mentioned in the background section. In the element, each component, including the layers, the grooves, as well as the installations, are perfectly sized, and can be manufactured with the required tolerances. Nothing is left to chance in the operations to be performed, and in particular any uncertainty due to manufacturing steps by molding is eliminated. All parts have the correct dimensions. Furthermore, as will be explained below, it can be industrialized, and all manufacturing steps can be automated. Furthermore, quality control is also carried out more optimally.

Furthermore, the element of the invention is highly versatile and can constitute both a lining and a partition, as will be seen below. These elements, when constituting a partition, furthermore have a differentiating feature of being able to be moved, relocated, and displaced subsequently throughout the life cycle of the building. In some embodiments, the first closure layer is a finishing coat, preferably plasterboard.

In some embodiments, in combination with the first closure layer, which is a finishing coat, the second closure layer is for the absorption of irregularities, intended to be attached to an external enclosure or to a party wall, such that the element constitutes a lining, with the second closure layer preferably being a polyurethane foam or a similar material that meets the functionality requirements thereof.

In other embodiments, in combination with the first closure layer, which is a finishing coat, the second closure layer is also a finishing coat, preferably plasterboard. Therefore, in this variant the element constitutes a partition wall.

In some embodiments, the edges of the insulating layer comprise fitting conformations intended for fitting with another adjacent element, these fitting conformations preferably being L-shaped and/or inverted L-shaped, machined tongued-and-grooved conformations.

In some embodiments, the insulating layer is made up of two or more layer segments provided with complementary fitting conformations intended for mutual coupling. These fitting conformations are preferably L-shaped and/or inverted L-shaped, machined tongued-and-grooved conformations.

In some embodiments, the insulating layer acts as a vapor barrier.

In some embodiments, the insulating layer is made of extruded polystyrene, rock wool, cork, a mixture, or a composite.

In some embodiments, the insulating layer is a machinable material.

In some embodiments, the structural frame is made of metal, plastic, composite, wood, carbon fiber, or a combination thereof.

In some embodiments, all the layers comprise matching openings intended for constituting windows, doors, balcony doors, or glazing.

In some embodiments, the upper and lower corners of the structural frame comprise support sheets, hooks, or rings projecting from the envelope of the element, such that they allow handling the element by cranes, with the support sheets, hooks, or rings preferably being made of galvanized steel.

In some embodiments, the lower corners of the structural frame comprise at least two height-adjusting legs, with the legs preferably being made of galvanized steel, preferably with a non-slip and pivoting base.

In some embodiments, the element has a maximum length of 12.5 m and a maximum height of 3.40 m.

In some embodiments, the element has a maximum length of 1.2 m and a height of 3.40 m.

In some embodiments, the edges of the joints of the first closure layer are arranged in different planes perpendicular to the general plane of the element. In this way, the transition between the joints of the layers is staggered, and therefore when the elements are arranged consecutively, the attachments between joints are not arranged in the same plane. In this way, the closure layers act as aligners and transverse retainers between the elements at the attachment level, which prevents the appearance of cracks.

The invention also relates to a building made up of a construction system provided with:
- Foundation profiles;
- Vertical support enclosures;
- Simple vertical enclosures;
- Precast hollow-core slabs and preferably stair elements; and elements according to any of the variants mentioned above.

Preferably, the vertical support enclosures are made up of a rectangular reinforced concrete slab from which continuous or discontinuous brackets integral with the slab project, parallel to a smaller side of the slab. For this enclosure, the number of brackets is not restrictive, where it may contain one or more brackets both on one face and on the other face of the panel.

The present specification also describes a method for manufacturing the element according to any of the variants mentioned above, comprising the steps of:
a. attaching the bars which will constitute the structural frame;
b. machining the insulating layer to obtain the grooves and/or recesses for accommodating the structural frame and the grooves for accommodating installations;
c. assembling the structural frame on the grooves and/or recesses for accommodating the structural frame;
d. introducing ducts and wiring in the grooves for accommodating installations;
e. attaching the first closure layer, preferably by means applying an adhesive and/or by means of screws;
f. flipping over the assembly obtained in step e);
g. adhering and/or screwing the second closure layer to the insulating layer and of the assembly of the element.

According to a second aspect, the invention relates to a prefabricated panel for forming internal enclosures in buildings, preferably false ceilings, comprising a structural framework formed by a structural frame and by longitudinal members and inner crosspieces interconnected together, and structural rods attached to the structural framework, for fastening the panel to a surface outside the panel, such as the ceiling framing.

The structural framework is made with at least some of the following materials: metal, wood, plastic, or a composite.

The panel comprises a tray fastened to the structural framework, and a first group of conduits with electric cables arranged on the tray and located at a first level with respect to the plane defined by the structural framework.

The panel further comprises a second group of conduits arranged at a second level with respect to a plane defined by the structural framework, and such that the second level is at a distance to the plane defined by the structural framework smaller than the distance between the first level and said plane. In other words, when the panel is installed forming a false ceiling, the electric cables, at least most of the length thereof, are arranged above the second group of conduits intended for channeling water, as established by the regulations.

At least one end of the conduits of the second group extends until it is close to or reaches the same border of the structural framework, in order to be able to be connected with the conduits of another adjacent prefabricated panel.

The other ends of these conduits may terminate at the end of the installation, and therefore may not reach the other end of the structural framework for connection with another adjacent prefabricated panel.

The group of electric cables is made up of any combination of different types of electric cables, such as: low-voltage electric cables, telecommunications network cables, telephone network, television signal, etc.

The prefabricated panel further comprises a flat finishing slab attached to the structural framework, having an inner surface and an outer surface, wherein the outer surface is intended for forming the visible face of the prefabricated panel once installed. Furthermore, the finishing slab has on its inner surface a thermal and/or sound insulating material, which can be made, for example, by attaching a sheet or panel made of a thermal and/or sound insulating material to the inner surface of the finishing slab.

This finishing slab is made with one of the following materials or a combination thereof: a plasterboard slab, wood, a mixture of wood, metal, plastic, or a composite. In a preferred embodiment, the finishing slab is a plasterboard slab. The panel made of thermal and/or sound insulating material can be, for example: extruded polystyrene, rock wool, mineral wool, cork, a mixture, or a composite.

For applications in which a higher degree of thermal and/or sound insulation is required in a building or housing, the panel made of thermal and/or sound insulating material has a greater thickness.

Preferably, the finishing slab and the panel made of thermal and/or sound insulating material are attached by means of an adhesive to one another, and in turn they are both mechanically fastened to the structural framework.

The finishing slab can have at least one opening for the passage of conduits or electric cables to the outside of the panel. Likewise, the panel made of insulating material also has one or more openings superimposed with an opening in the finishing slab, for the passage of conduits or electric cables. These openings can be used, for example, for the installation of light fixtures, ventilation outlets, smoke detectors, etc.

In preferred embodiments of the invention, the prefabricated panel integrates various groups of conduits arranged at different levels with respect to one another, for channeling conditioning air, sanitary or conditioning or drainage water, and ventilation air.

In this way, in a preferred embodiment the prefabricated panel further comprises a third group of conduits arranged at a third level with respect to the plane defined by the structural framework, such that this third level is at a smaller distance to the plane defined by the structural framework than the second level. In other embodiments, there may be four or more levels of conduits based on the needs in each particular application.

The first, second, and third levels referred to above must be understood to mean planes parallel to the plane defined by the structural framework, in which most of the length of the conduits or cables extend in the respective plane.

The conduits of each group are supported by the structural framework by means of attachment elements suitable for this purpose.

The prefabricated panel can have any polygonal configuration, whether parallelepiped or triangular, to enable attachment through any of the edges thereof with other prefabricated panels with the same or different shape.

The different aspects and embodiments of the invention defined above may be combined together, provided that they are mutually compatible.

Additional advantages and features of the invention will become apparent from the detailed description that follows and will be particularly indicated in the attached claims.

### BRIEF DESCRIPTION OF THE DRAWINGS

As a complement to the description, and for the purpose of helping to make the features of the invention more readily understandable, in accordance with practical exemplary embodiments of the invention, said description is accompanied by a set of figures which, by way of illustration and not limitation, represent the following:
Figure 1 shows an element according to the invention, in the variant corresponding to a lining intended to be attached to a structural enclosure.
Figure 2 shows an element according to the invention, in the variant corresponding to a partition, i.e., provided with finishing coats on the two faces.
Figure 3 schematically shows an elevational section view of a building according to the invention erected with elements according to the invention.

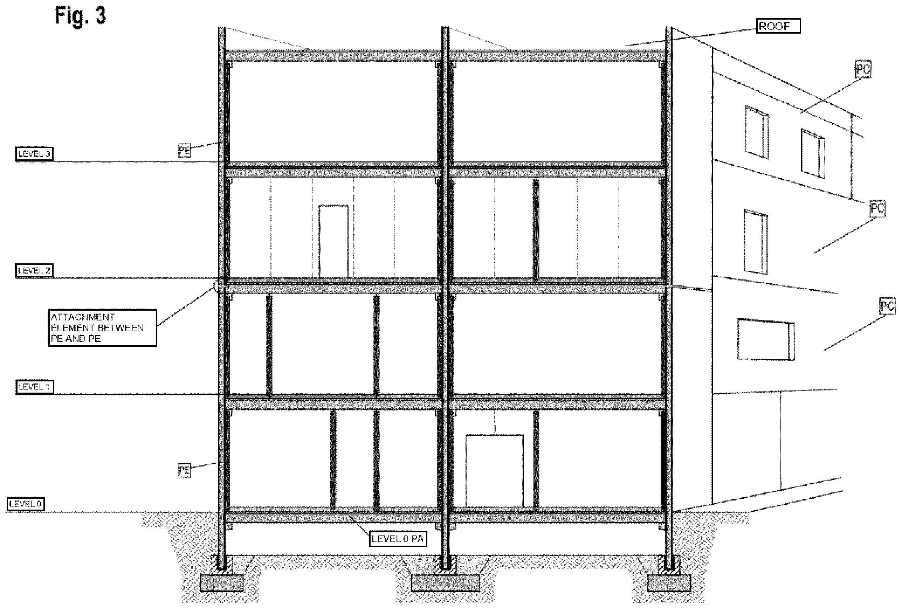

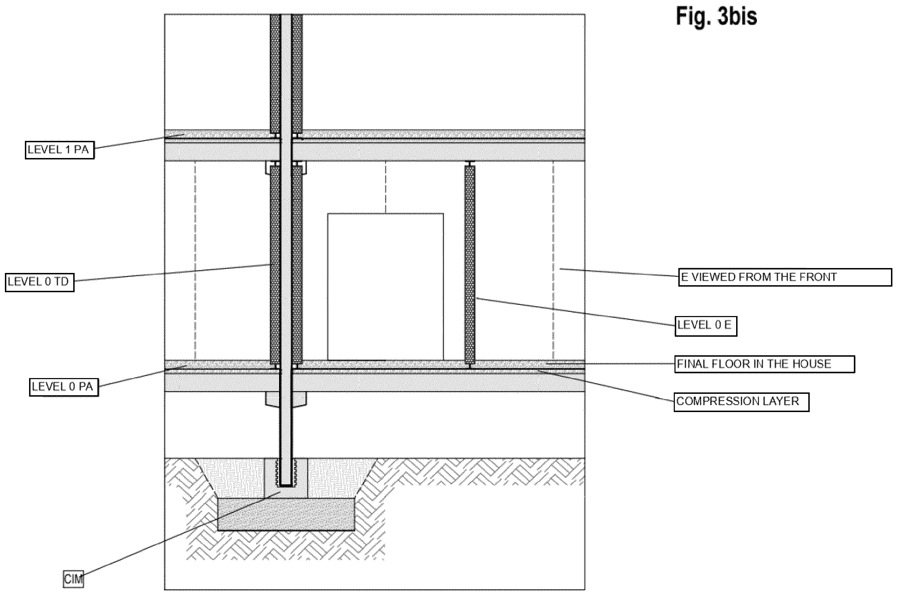

Figure 3bis is an enlargement of Figure 3 in the foundation area.

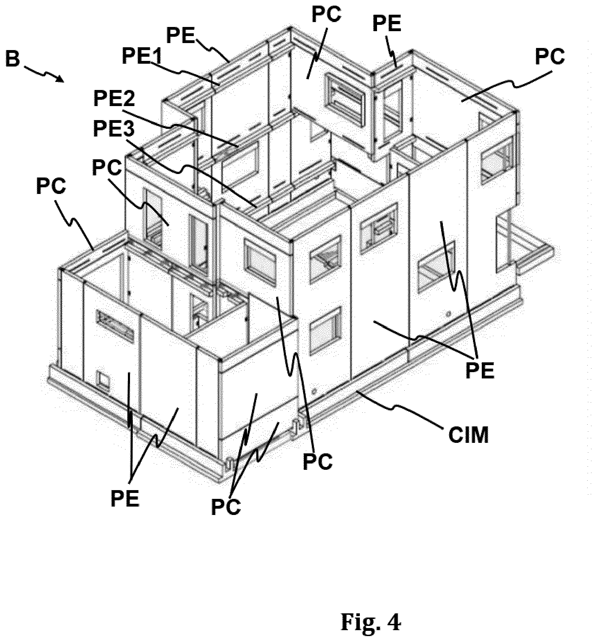

Figure 4 shows a perspective view of a building according to the invention.

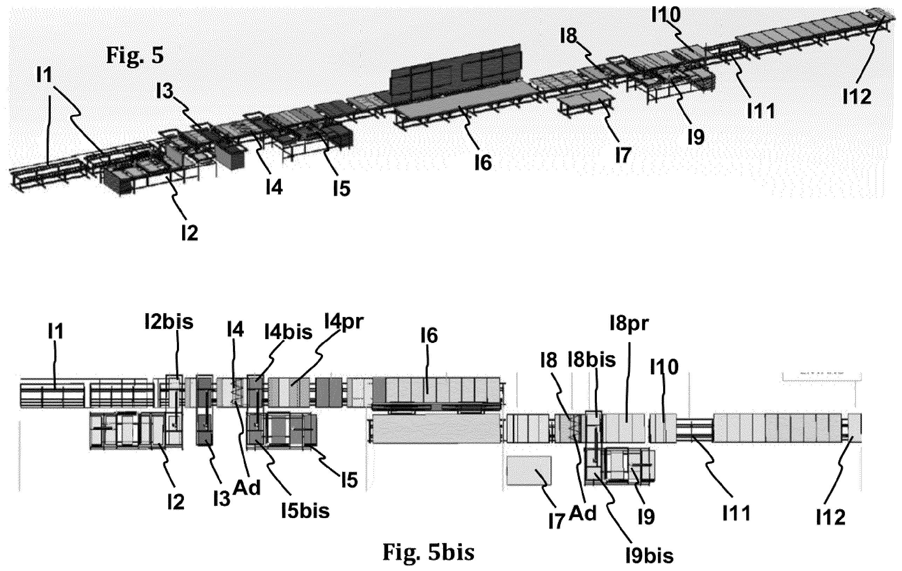

Figure 5 shows a perspective view of a manufacturing line, highlighting the stations making up same according to a preferred embodiment.
Figure 5bis shows a plan view of the manufacturing line of Figure 5.

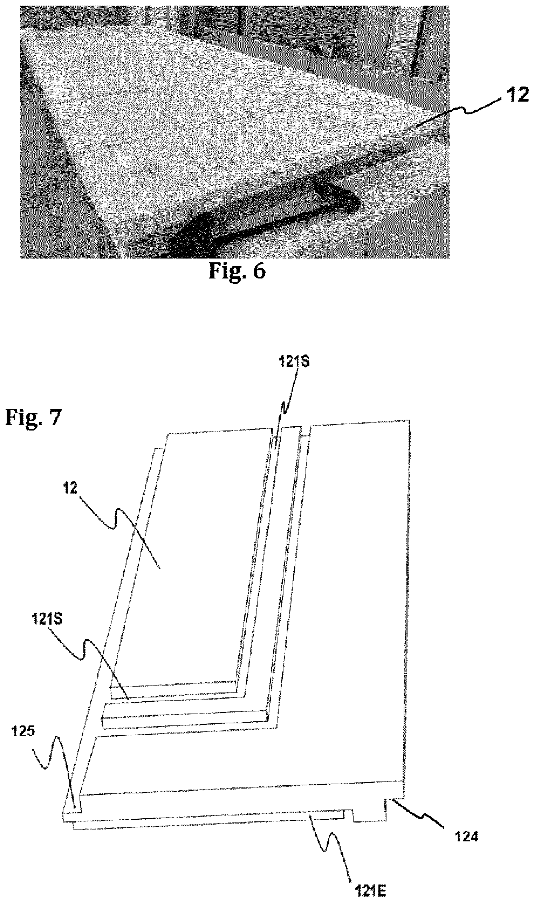

Figure 6 is a photograph of the insulating layer corresponding to an element, in which the grooves, which are machined to accommodate installations and the structural frame, have been marked in an automated manner.
Figure 7 is a drawing, in a perspective view, of an insulating layer segment intended for forming the insulating layer of an element, already machined to receive installations and the structural frame.

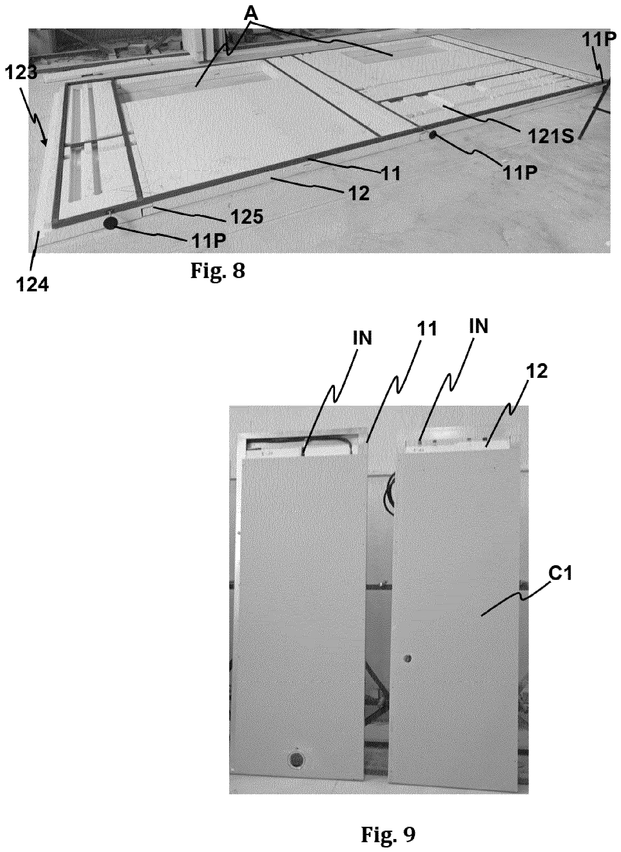

Figure 8 shows an element according to the invention in the variant corresponding to a lining.
Figure 9 shows elements according to the invention, in a variant corresponding to a partition, in which the plasterboard layer covers almost the entire surface, leaving an upper band free of the closure layer, for the fitting of a false ceiling, although complete covering of the structural frame could also be envisaged.

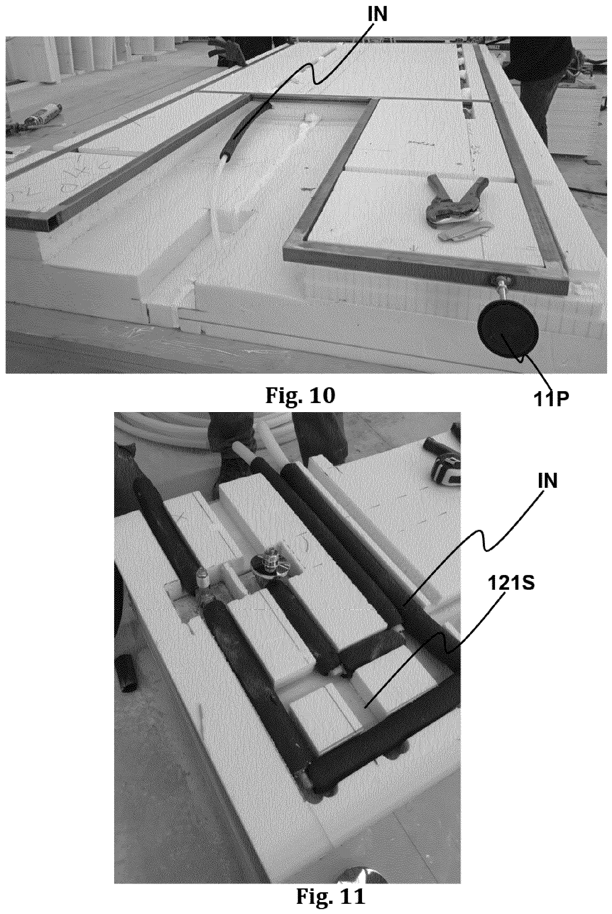

Figure 10 shows a step of manufacturing the element according to the invention, in which the metal frame has already been fitted and part of the installations has already been arranged.
Figure 11 shows a detail of the arrangement of the installations, in this case pipes, in the insulating layer.

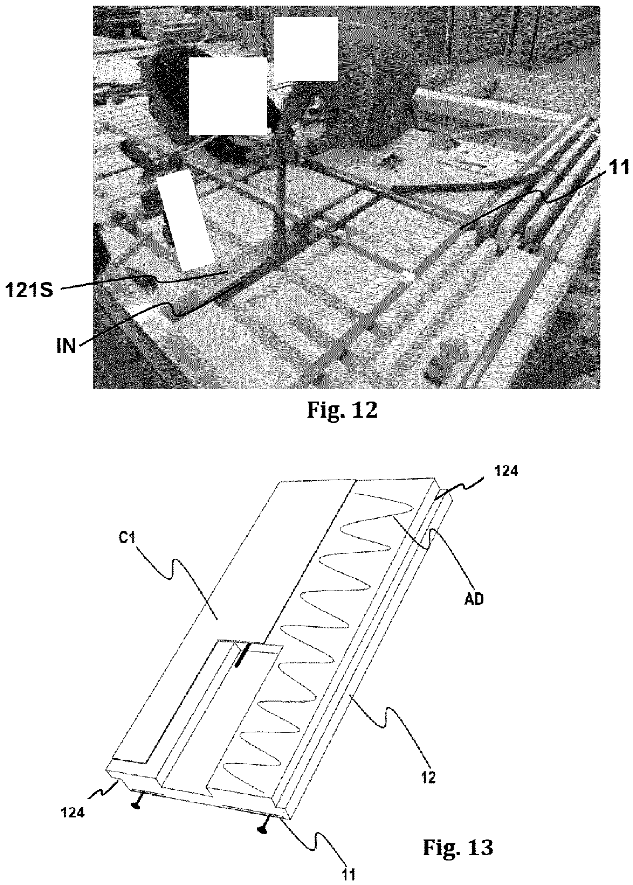

Figure 12 shows the manufacturing step corresponding to the fitting of the installations.

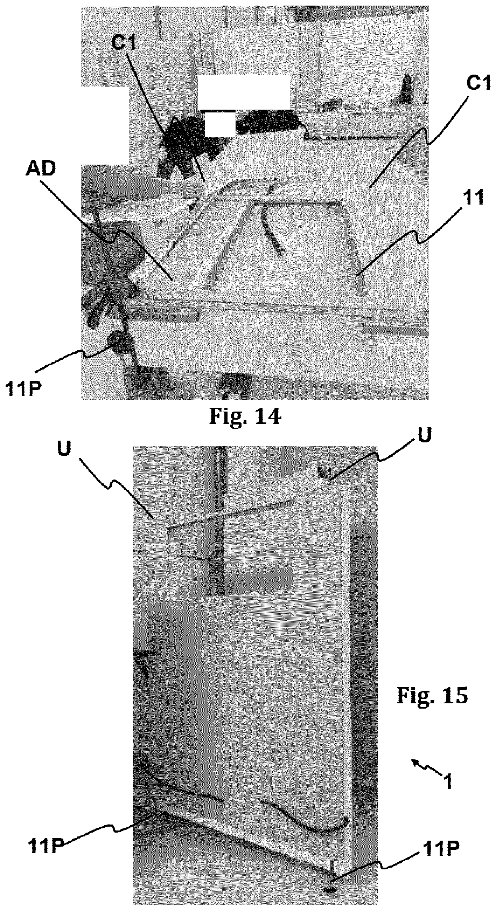

Figures 13 and 14 show the step of placing the first closure layer which is adhered by means of an adhesive and/or by means of nuts and bolts.
Figure 15 shows a lining element ready to be moved to the construction site.

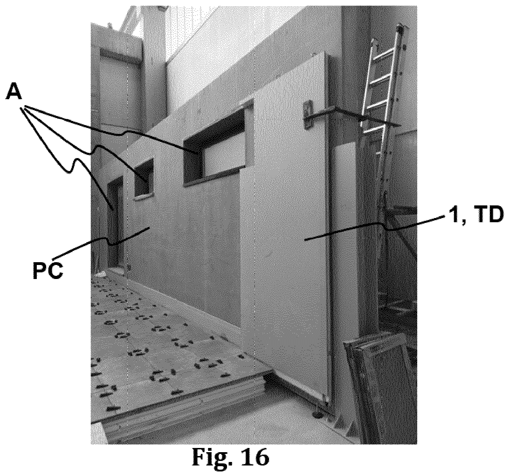

Figure 16 shows, in a pilot installation, the placement of a lining element attached to a structural enclosure.

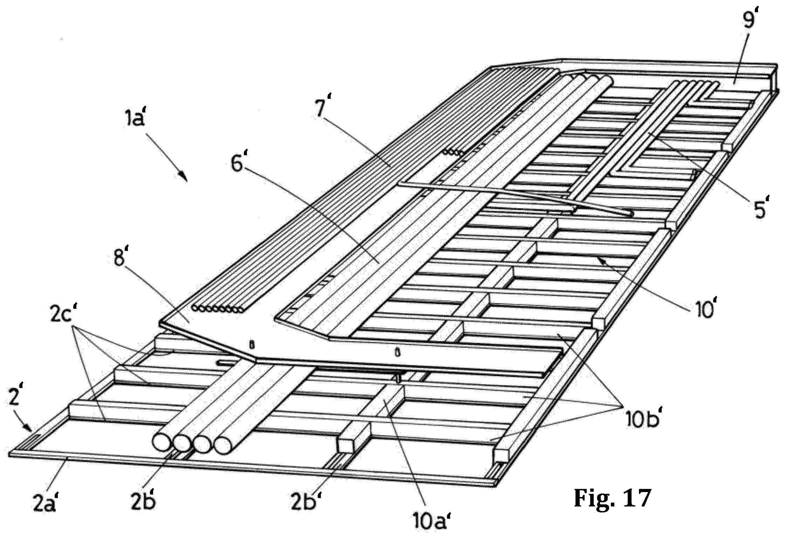

Figures 17 to 20 illustrate another aspect of the invention, specifically:
   Figure 17 shows a perspective view of an embodiment of a first part of the panel made up mainly of the structural framework, conduits, and electric cables.

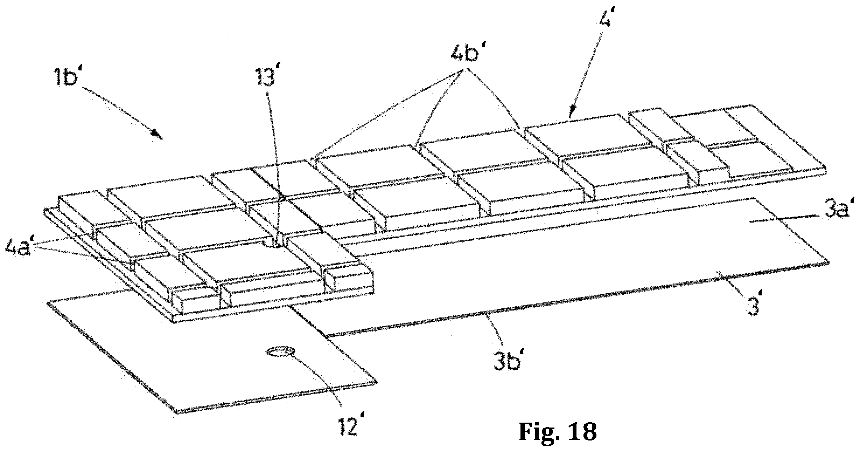

   Figure 18 shows a perspective view of an embodiment of a second part of the panel made up mainly of the finishing slab and a panel made of insulating material.

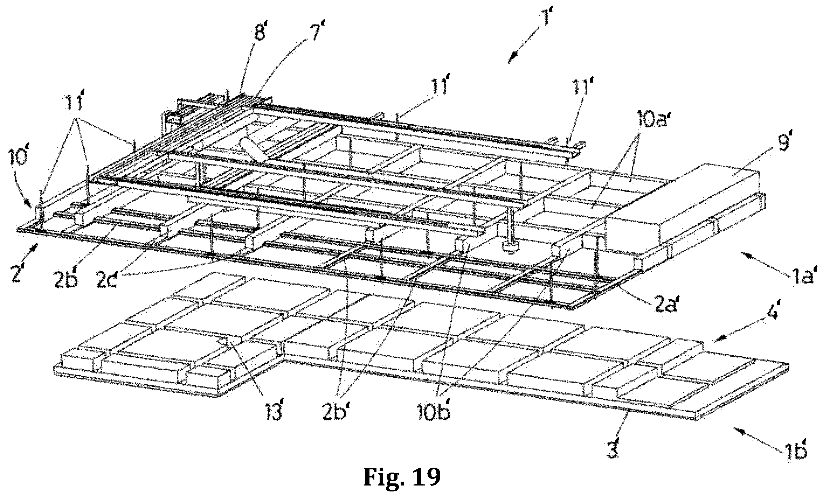

   Figure 19 shows an exploded view of an embodiment of the first and second parts of the panel in a mutual coupling position.

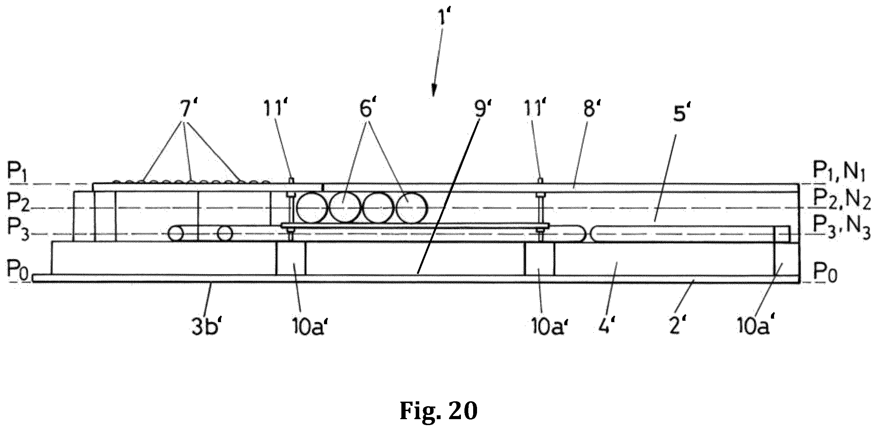

   Figure 20 shows a cross-section view of a panel with the first and second parts coupled.

### DESCRIPTION OF A PREFERRED EMBODIMENT OF THE INVENTION

In the description of the possible preferred embodiments of the invention, numerous details must be provided to better understand the invention. Even so, it will be apparent to the person skilled in the art that the invention can be implemented without these specific details. On the other hand, well-known features have not been described in detail to avoid unnecessarily complicating the description.

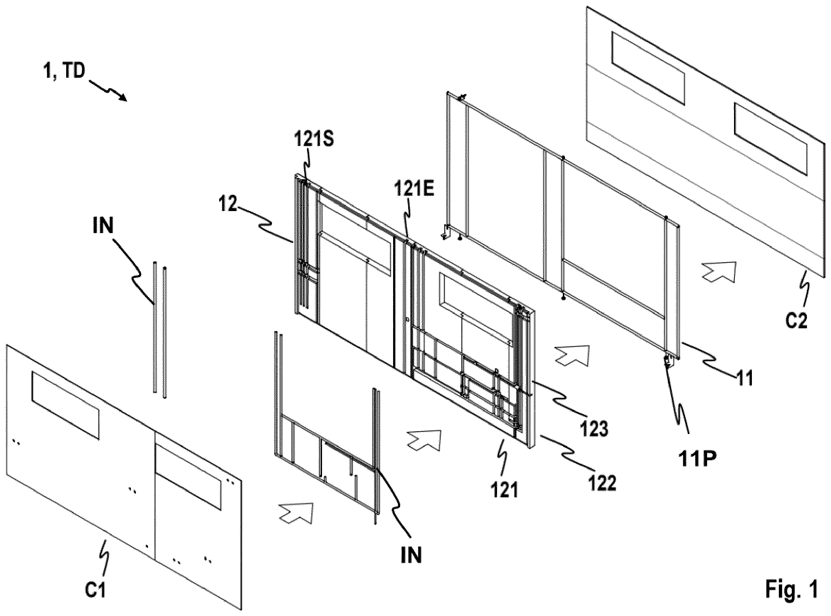

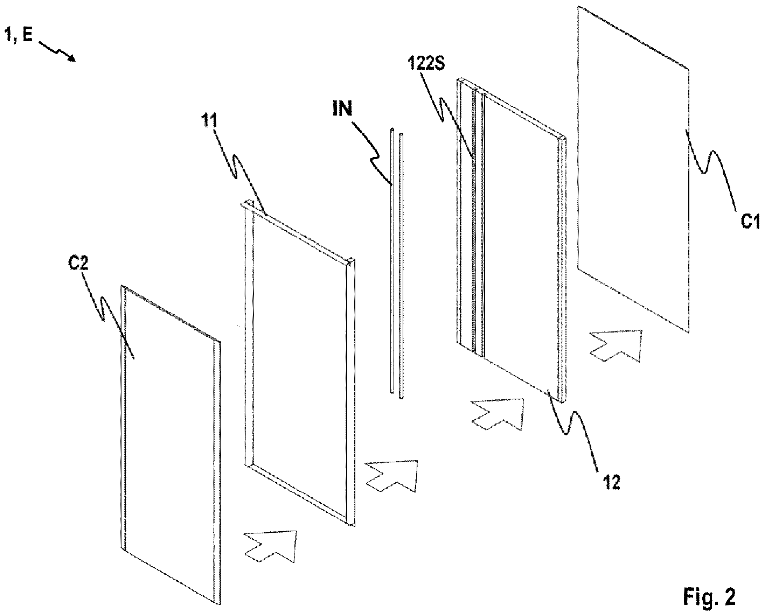

As can be seen in Figures 1 and 2, the invention relates to a prefabricated internal enclosure element 1, **E,** TD comprising a structural frame 11 and an insulating layer 12, provided with a first face 121 and a second face 122. The first face 121 and/or the second face 122 comprising grooves and/or recesses 121S, 122S for accommodating installations IN.

According to the invention, the first face 121 and/or the second face 122 comprise grooves and/or recesses 121E for accommodating the structural frame 11, and in that the element 1 comprises a first closure layer C1 attached to the first face 121 and a second closure layer C2 attached to the second face 122.

Therefore, the insulating layer performs the functions of thermal insulation, sound insulation, vapor barrier, placing the conduits of installations IN, and housing the structural frame 11. As will be seen below, it is the structural frame itself which will be attached to the enclosure, preferably fastened thereto, and also supported on the framing by means of legs 11P that will be described below. In other words, the structure will be responsible for transmitting all the weight to framing and enclosures, and the insulation 12 will only bear its own weight and the weight of all the elements it houses.

As can be seen in Figure 1 or 2, the first closure layer C1 is a finishing coat, preferably plasterboard.

As shown in Figure 1, the second closure layer C2 is for the absorption of irregularities, intended to be attached to an external enclosure or to a party wall, such that the element 1, TD constitutes a lining, with the closure layer C2 preferably being a polyurethane foam or a similar material that meets the functionality requirements thereof.

As shown in Figure 2, the second closure layer C2 is also a finishing coat, preferably plasterboard. Therefore, the elements can perform the function of distribution panels, forming the separations and distributions of the different spaces of the buildings according to use thereof. As a result of the invention, these are pieces which can be adapted to different uses and can be taken out, relocated, or replaced with others throughout the life cycle of the building, in order to change the uses thereof.

As can be seen, for example, in Figure 8, the edges 123 of the insulating layer 12 comprise fitting conformations 124 intended for the fitting of one element 1 with another adjacent element 1, these fitting conformations preferably being L-shaped and/or inverted L-shaped, machined tongued-and-grooved conformations.

As can be seen in Figure 8, it is also envisaged for the insulating layer 12 to be made up of two or more layer segments provided with complementary fitting conformations 125 intended for mutual coupling, these fitting conformations preferably being L-shaped and/or inverted L-shaped, machined tongued-and-grooved conformations.

As can be seen in Figure 8, all the layers of some elements according to the invention may comprise matching openings A intended for constituting windows, doors, balcony doors, or glazing.

As shown in Figure 15, the upper and lower corners of the structural frame 11 comprise support sheets, hooks, or rings U projecting from the envelope of the element 1, such that they allow handling the element by cranes, with the support sheets, hooks, or rings preferably being made of galvanized steel.

In the same Figure 15, or also in Figure 14 or 10, it can be seen that the lower corners of the structural frame 11 may comprise at least two height-adjusting legs 11P, with the legs 11P preferably being made of galvanized steel, and preferably with a non-slip and pivoting base.

Preferably, the maximum length of the element, when it is intended to form a lining, is 12.5 m and the maximum height thereof is 3.40 m.

When it is an element intended to form a partition, a maximum length of 1.2 m and a height of 3.40 m are envisaged.

As shown in Figures 3 and 4, the invention also relates to a building B made up of a construction system provided with:
- Foundation profiles CIM;
- Vertical support enclosures PE;
- Simple vertical enclosures PC;
- Precast hollow-core slabs PA; and elements according to any of the embodiments mentioned above.

Note that both the PE elements and the PC elements are configured to be stackable and, to that end, they are provided with attachment means at their upper and lower edges, and also on the sides, intended to ensure stacking stability.

Though not depicted, the building may also comprise stair elements that are also prefabricated.

It can be seen in Figure 4 that the vertical support enclosures PE are made up of a rectangular reinforced concrete slab. Continuous or discontinuous brackets PE1, PE2, PE3 integral with the PE slab project from this slab parallel to a smaller side of the slab, with one of the brackets PE1 being arranged close to a smaller side, the other bracket PE2 being arranged in a central portion of the PE slab, and the third bracket PE3 being arranged close to the other smaller side of the PE slab.

As can be seen in Figure 4, for this enclosure the number of brackets is not restrictive, where it may contain one or more brackets both on one face and on the other face of the panel.

### Detailed Description of the Vertical Support Enclosures PE

These enclosures PE perform structural and enclosure functions. They can be used as part of the envelope or skin of the building, as structural elements in party walls, or forming the rigid cores in taller structures.

They support the hollow-core slabs PA and are linked to the simple vertical enclosure elements that will be described below.

They are conceived and designed to receive TD pieces with which they form a single enclosure element that meets the acoustic, thermal, comfort, health standard, sustainability, and efficiency requirements, in order to ensure the highest structural behavior, use, functionality, and energy saving qualities.

Preferably, their measurements are limited to a maximum of 12.50 meter long by 3.40 meter wide, with the maximum thickness according to a preferred embodiment being about 0.16 meters, without these 0.16 meters being restrictive to an increase in thickness derived from different structural needs.

During assembly, the vertical support enclosures PE can be stacked and assembled one on top of the other, thereby creating high-rise buildings, whether for single-family dwellings, multi-family dwellings, or another type of dwellings considered as a high-rise building.

The first PE assembled in the construction site have the roughness required to ensure the linkage between the PE and the foundation piece CIM, that is described below.

The necessary openings for windows, balcony doors, and doors, as well as other holes necessary for ventilation or for the passage of installations, can be made on these PE.

As can be seen in Figure 3 or 4, brackets PE1, PE2, PE3 that will serve as a support for pieces of hollow-core slabs PA that are described below, are located in the PE.

According to their function, the vertical support enclosures PE are made up of:
- metal frameworks, concrete, metal sub-frames, neoprenes, metal angles, aluminum profiles.
- glass (for air conditioning and/or safety) on windows, balcony doors and doors; aluminum blinds, blind motors, installation wiring; asphalt sheets, folded sheet metals, gratings for ventilation, and all the accessory and auxiliary elements that have been defined for the PE itself.

Likewise, the PE can have different finishings: stone, ceramic, wood, laminate, textured concrete, or paint.

### Detailed Description of the Simple Vertical Enclosures PC

These enclosures PC perform the functions of enclosing and bracing the PE elements, such that they confer the required degree of monolithism to the building and form an inseparable structural assembly. They cannot function without each other.

These pieces are usually those used to form large windows and they are often arranged on façades.

Like the PE pieces, these enclosures are preferably accompanied by TD elements and together they form a single enclosure element that meets the acoustic, thermal, comfort, health standard, sustainability, and efficiency requirements, in order to ensure the highest structural behavior, use, functionality, and energy saving qualities.

The materials, the dimensions, the stacking and assembling method, the roughness, the incorporated enclosure elements, the incorporated constructive elements, and the finishings of enclosures PC are the same and/or similar to PE, with PC differing from PE in that it does not have any support brackets.

### Precast hollow-core slabs PA

These slabs are intended to be supported and/or fastened on the brackets of the vertical enclosures to form the different horizontal levels (habitable, accessible, non-accessible, or roof and top closure levels) of the building.

They are made up of metal frameworks (preferably by means of a prestressed cable) and concrete.

In a preferred embodiment of the building, their measurements are limited to a maximum of 12.50 meter long by 1.20 meters wide and a maximum thickness of 0.40 meters.

### Foundation profiles CIM

These profiles are continuous capitals that serve to support and hold the PE panels and the PC panels. They perform the function of foundation and are complemented on construction site according to loads and geotechnical report.

They are preferably made of metal frameworks and concrete. Their inner surface has the necessary roughness to ensure their linkage with PE and PC.

### Detailed description of the method for manufacturing elements according to the invention and facility for carrying out same

The invention also relates to a method for manufacturing the element according to any of the variants mentioned above which can be carried out in the facility shown in Figure 5 or 5bis. Reference is made to the steps, indicating the stations in the facility where the steps are carried out.

Specifically, the method comprises the steps of:
a. attaching I1 the bars which will constitute the structural frame 11;
b. machining I2 the insulating layer 12 to obtain the grooves and/or recesses 121E for accommodating the structural frame 11, the grooves 121S and 122S for accommodating installations, and the recesses 124 and 125;
c. assembling I2bis the structural frame 11 on the grooves and/or recesses 121E for accommodating the structural frame 11;
d. introducing I7 ducts and wiring IN in the grooves 121S, 122S for accommodating installations;
e. applying I8, preferably by means of an adhesive AD and/or nuts and bolts to the first closure layer C1;
f. flipping over I6 assembly obtained in step e);
g. adhering and/or screwing I3 the second closure layer to the insulating layer 12 and of the assembly of the element, wherein this second layer C2 can be for the absorption of irregularities or a finishing coat.

Note that this sequence illustrates an embodiment of the method and that the order of the steps may be changed based on the type of particular element to be produced.

For example, the introduction of ducts can be performed before the step of applying adhesive and/or nuts and bolts for the attachment of the closure layer, all this before flipping over I6 the assembly obtained in steps I4 and I5. Obviously, this would imply changing the order of the corresponding stations of the facility shown in Figures 5 and 5bis.

The methods for manufacturing the elements 1 in the variants thereof such as partition E and lining TD will be described in detail below:

### Element 1 according to the invention E: inner partition or wall

All the operations described below are performed in the facility which, according to a preferred embodiment, is illustrated in Figures 5 and 5bis, and following the planes previously made by an engineering department.
I1. First, the bars that will form the structural frame 11, previously cut according to the cutting plan, are received and stockpiled next to the line;
I1. The bars (and optionally metal accessories such as fastenings for the legs 11P or upper and inner handling hooks U) are attached together;
I2. The insulating slabs 12 are received and stockpiled next to the line according to thickness. The insulation 12 is machined by means of an automated robot according to the specific orders for the element in question, i.e., cuts, grooves, perforations, etc. made on the two faces 121 and 122 of the insulating panel 12; This step is performed to enable incorporating the insulation 12 in the structural frame 11 and also to enable housing the installations 11 that will be arranged in the element E thereafter.
I2bis. Each insulating piece 12 is assembled in its position with the structural frame 11.

Note: At this time and for element E, the process continues without stopping in the station for the adhesion of the closure layer of the second face, step I3, which will indeed be applicable in the case of lining elements.

I4. Adhesive AD that will attach the assembly of structural frame 11 and insulation 12 to the next slab of closure layer, preferably plasterboard C1, is applied in the line.

I5. Slabs of closure layer, preferably plasterboard (preferably 15 mm thick plasterboard of the type that is moisture-proof and fireproof) are received and stockpiled.

I5bis. The slabs of closure layer, preferably plasterboard, are machined next to the line by means of an automated robot, and according to the preprogrammed cutting plan. In other words, cuts, perforations, etc., are made. With this step, the tasks of connecting the installations inserted in the element to the final mechanisms thereof can thus be performed.

I4bis. Each of the slabs of closure layer, preferably plasterboard C1, in the line is placed, preferably by means of an automated robot, in its position above the applied adhesive AD.

I4pr. The slabs of closure layer, preferably plasterboard C1, in the line are pressed by means of rollers or the like on the adhesive AD to ensure the proper adhesion thereof.

I6. A flipping station receives the entire assembly of structural frame 11, insulation 12, adhesive AD, slabs of closure layer, preferably plasterboard C1, and flips said assembly. In this way, visible face 121 is oriented upwards, and therefore the insulation layer 12 with the channels for placing the installations are visible and accessible.

I7. Here, all the elements (conduits, tubes, cables, accessories, etc.) forming the installations are received and stockpiled, according to the manufacturing orders. Installations for cold and hot water, electricity, data, drainage, air conditioning, etc., are preassembled next to the line. In the line, all the installations IN arranged in the element are inserted in the channels made on the insulation 12, i.e., the tasks illustrated by means of Figure 12 are performed, but in the production line. The installations are then fastened to ensure that they do not come out of the channel made on the insulation 12.

I8. Adhesive AD that will attach the assembly of structural frame 11 and insulation 12 to the next closure layer, preferably plasterboard C2, is applied in this station.

Note that the closure layers can be attached by means of adhesive only, with screws only, or with a combination of both.

I9. Slabs of closure layer, preferably plasterboard, are received and stockpiled next to the line. These slabs are preferably 15 mm thick, have moisture-proof characteristics, and/or are fireproof.

I9bis. The slabs of closure layer, preferably plasterboard, are machined next to the line by means of an automated robot, according to the manufacturing orders, i.e., cuts, perforations, etc. With this step, the tasks of connecting the installations inserted in the element to the final mechanisms thereof can be performed.

I8bis. An automated robot places each of the slabs of closure layer, preferably plasterboard, in the line in its position, above the applied adhesive.

I8pr. The slabs of closure layer, preferably plasterboard C2, in the line are pressed by means of rollers or the like on the adhesive Ad to ensure the proper adhesion thereof.

I10. All the elements (build-in mechanisms, accessories, etc.) forming the surface finishing of the installations are received and stockpiled next to the line. In the line, the final mechanisms and accessories are inserted and connected between the perforations made on the slabs of closure layer, preferably plasterboard, and the installations inserted in the insulation 12.

I11. All the films are received and stockpiled next to the line. In the line, the first packaging with a film that will serve as a protection for the finished "elements 1" is performed.

I12. All the plastic bags or other protective materials that will serve as a protection for the finished "elements 1" are received and stockpiled next to the line. In the line, the final packaging, wrapping, and labeling of each finished "element 1" is preferably performed by means of an automated robot. Finally, the packaged, protected, and labeled finished "elements 1" are received and stockpiled.

Once palletized, the packed elements 1 are transported to where the final stock is located in the factory, ready to be transported to a construction site to proceed with the following process.

### Element 1 according to the invention TD: lining

The method for manufacturing elements 1 of TD type (inner lining such as that of Figure 1) includes the same steps as for the type E elements, differing only in the following steps:
I3. The material which will absorb irregularities, preferably in the form of polyurethane foam panels or coils, is received next to the line. In the line, the polyurethane foam panel is placed on the assembly of structural frame 11 and insulating layer 12.

In other words, unlike element E, for element TD, there is no stopping at the stations for adhesive and slabs of closure layer, preferably plasterboard, i.e., stations I4, 14bis, I4PR, I5, I5bis.

### Embodiments of the false ceiling

Figures 17 and 19 show embodiments of a first part 1a' of a prefabricated panel 1' according to the invention comprising a structural framework 2' formed by a perimeter frame 2a", longitudinal members 2b", and inner crosspieces 2c' interconnected together within the perimeter frame 2a".

This first part 1a' of the prefabricated panel 1' furthermore has a tray 8' fastened to the structural framework 2', and a first group of conduits with electric cables 7' arranged on the tray 8' and located at a first level with respect to the plane defined by the structural framework 2'.

This first part 1a' furthermore integrates a second group 6' of conduits for channeling water or air, arranged at a second level with respect to a plane defined by the structural framework 2'. As can be seen particularly in Figures 17 and 20, this second level also has an air conditioning duct 9'.

The first level in which the electric cables 7' are located is at a distance to the plane defined by the structural framework 2' greater than the distance between the second level and said plane, i.e., the electric cables 7' are above the group of conduits 6', once the panel is installed to form a false ceiling, as will be described below in relation to Figure 20.

As can be seen in Figure 17, at least one end of the conduits of the second group 6' extends until it is close to or reaches the same border of the structural framework 2', in order to be able to be connected with the conduits of another adjacent prefabricated panel.

Figure 18 shows a second part 1b' of the panel 1', formed by a flat finishing slab 3', having an inner surface 3a' and an outer surface 3b' which forms the visible face of the prefabricated panel 1'. This finishing slab 3' is attached to the structural framework 2' by conventional means.

Furthermore, the panel 1' integrates a panel made of thermal and/or sound insulating material 4' superimposed on the inner surface 3a' of the finishing slab 3', preferably fastened to the finishing slab 3' by means of an adhesive.

Depending on the degree of thermal and/or sound insulation that is required, the panel made of insulating material 4' will have a larger or smaller thickness. Figure 18 depicts a panel made of insulating material 4' with a large thickness for panels 1' intended to be installed on a roof of a building or housing, or for cases requiring a high degree of insulation.

In this case, the panel made of thermal and/or sound insulating material 4' has at least one longitudinal channel 4a' and transverse channels 4b' that are intercommunicated, as can be seen in Figure 18. The longitudinal members 2a", crosspieces 2b", and the perimeter frame 2a" of the structural framework 2' are arranged and sized in a manner complementary to the longitudinal channel 4a' and transverse channels 4b', such that when the assembly formed by the finishing slab 3' and the panel made of insulating material 4' are attached to the structural frame 2' previously fastened to an outer surface by means of the rods 11', the longitudinal and transverse channels 4a', 4b' fit in the longitudinal members, the crosspieces, and the structural frame 2a', 2b', 2c of the structural framework 2', as illustrated in Figure 19, such that the latter are housed in the longitudinal and transverse channels 4a', 4b'.

Furthermore, the first part 1a of the panel 1' has a lattice 10' of longitudinal members 10a' and crosspieces 10b' made of thermal and/or sound insulating material, which are attached to the structural framework 2' and interconnected together, and which coincide with one another and are superimposed with the longitudinal members and crosspieces 2b', 2c of the structural framework 2', as can be seen in Figures 17 and 19. The longitudinal members 10a' and crosspieces 10b' can be made of the same material as the panel made of insulating material 4'.

When the assembly formed by the finishing slab 3' and the panel made of insulating material 4' are coupled to the structural frame 2' previously fastened to an outer surface, such as a structural ceiling or framing, by means of the rods 11', the longitudinal and transverse channels 4a', 4b' fit in the longitudinal members and the crosspieces 10a,10b, such that the latter are housed the longitudinal and transverse channels 4a', 4b', as can be seen in Figure 20. The purpose of this coupling functionality is to prevent the formation of thermal bridges.

As depicted in Figure 19, the panel 1' has structural rods 11' attached to the structural framework 2' to fasten the panel to a support outside the panel such as, for example, a ceiling, such that these rods 11' are responsible for transmitting stresses and structural reactions of the panel to the framing and the structural enclosures of the building.

In the embodiment of Figure 19, the panel 1' has a polygonal shape, specifically the assembly formed by the finishing slab 3' and the panel made of insulating material 4' has an L shape, and the structural framework 2' has a rectangular shape.

In other preferred embodiments, the panel 1' may have any other configuration, even a triangular shape, as long as it is formed by straight sides.

The finishing slab 3' has at least one opening 12' for the passage of conduits or electric cables to the outside of the panel. Likewise, the panel made of insulating material 4' also has one or more openings 13' coinciding with the opening 12' of the finishing slab 3', for the passage of conduits and/or electric cables.

As depicted in Figure 20, the prefabricated panel 1' may integrate a third group 5' of conduits arranged at a third level N3 with respect to the plane P0 defined by the structural framework 2', and wherein the third level N3 is at a smaller distance from the plane P0 defined by the structural framework 2' than the first level N1 and the second level N2.

As can be seen in this Figure 20, the first level N1, the second level N2, and the third level N3 extend, respectively, in planes P1, P2, P3 parallel to plane P0 defined by the structural framework 2'.

All the conduits of the panel, i.e., the conduits of the first group, the second group, and the third group, are supported by the structural framework 2', by means of attachment elements suitable for this purpose.

In view of this description and figures, the person skilled in the art may understand that the invention has been described according to some preferred embodiments thereof, but that multiple variations may be introduced in said preferred embodiments, without leaving the object of the invention as claimed.

In particular, as regards the manufacturing process and the facility for carrying out said process, it is conceivable that some of the steps are not performed in the sequences described in the preferred embodiments. Therefore, all those embodiments consisting of displacing one or more of the steps of the method will be considered to be within the scope of the claims, provided that this does not alter the prefabricated element obtained as a result.

In this text, the term "comprise(s)" and its derivations (such as "comprising", etc.) should not be understood in an exclusive sense. That is to say, these terms should not be interpreted as excluding the possibility that what is described and defined may include more elements, stages, etc.

## Claims

1. A prefabricated internal enclosure element (1, E, TD) comprising a structural frame (11) and an insulating layer (12) provided with a first face (121) and a second face (122), the first face (121) and/or the second face (122) comprising grooves and/or recesses (121S, 122S) for accommodating installations (IN), **characterized in that** the first face (121) and/or the second face (122) comprise grooves and/or recesses (121E) for accommodating the structural frame (11), and **in that** the element (1) comprises a first closure layer (C1) attached to the first face (121) and a second closure layer (C2) attached to the second face (122).

2. The element (1, E) according to claim 1, being elements which can be subsequently moved, relocated, and displaced throughout the life cycle of the building.

3. The element (1) according to claim 1, wherein the first closure layer (C1) is a finishing coat, preferably plasterboard.

4. The element (1, TD) according to claim 1, wherein the second closure layer (C2) is for the absorption of irregularities, and is intended to be attached to an external enclosure or to a party wall, such that the element (1, TD) constitutes a lining, the closure layer (C2) preferably being a polyurethane foam or a similar material that meets the functionality requirements thereof.

5. The element (1, E) according to claim 1, wherein the second closure layer (C2) is a finishing coat, preferably plasterboard.

6. The element (1, TD) according to claim 1, wherein the edges (123) of the insulating layer (12) comprise fitting conformations (124) intended for the fitting of one element (1) with another adjacent element (1), these fitting conformations preferably being L-shaped and/or inverted L-shaped, machined tongued-and-grooved conformations.

7. The element (1, TD) according to claim 1, wherein the insulating layer (12) is made up of two or more layer segments provided with complementary fitting conformations (125) intended for mutual coupling, these fitting conformations preferably being L-shaped and/or inverted L-shaped, machined tongued-and-grooved conformations.

8. The element (1) according to any of the preceding claims, wherein the insulating layer (12) is made of extruded polystyrene, rock wool, cork, a mixture, or a composite.

9. The element (1) according to any of the preceding claims, wherein the insulating layer (12) is a machinable material.

10. The element (1) according to any of the preceding claims, wherein the structural frame (11) is made of metal, plastic, composite, wood, carbon fiber, or a combination thereof.

11. The element (1) according to any of the preceding claims, wherein all the layers comprise matching openings (A) intended for constituting windows, doors, balcony doors, or glazing.

12. The element (1) according to any of the preceding claims, wherein the upper and lower corners of the structural frame (11) comprise support sheets, hooks, or rings (U) projecting from the envelope of the element (1), such that they allow handling the element by cranes, with the support sheets, hooks, or rings preferably being made of galvanized steel.

13. The element (1, TD) according to any of the preceding claims, wherein the lower corners of the structural frame (11) comprise at least two height-adjusting legs (11P), with the legs (11P) preferably being made of galvanized steel, preferably with a non-slip and pivoting base.

14. The element (1, TD) according to claim 4, the maximum length of which is 12.5 m and the maximum height of which is 3.40 m.

15. The element (1, E) according to claim 5, the maximum length of which is 1.20 m and the height of which is 3.40 m.

16. The element (1) according to any of the preceding claims, wherein the edges of the joints of the slabs, of the first closure layer (C1), are arranged in different planes perpendicular to the general plane of the element. In this way, the transition between the joints of these slabs which can form the first closure layer (C1) is staggered, and therefore when the elements are arranged consecutively, the attachments between joints are not arranged in the same plane.

17. A building (B) made up of a construction system provided with:
- Foundation profiles (CIM);
- Vertical support enclosures (PE);
- Simple vertical enclosures (PC);
- precast hollow-core slabs (PA) and preferably stair elements; and elements according to any of claims 1 to 16.

18. The building (B) according to claim 17, wherein the vertical support enclosures (PE) are made up of a rectangular reinforced concrete slab. Continuous or discontinuous brackets (PE1, PE2) integral with the slab (PE) project from this slab parallel to a smaller side of the slab, with one of the brackets (PE1) being arranged close to a smaller side and the other bracket (PE2) being arranged in a central portion of the slab (PE). For this enclosure (PE), the number of brackets (PE1, PE2) is not restrictive. Similarly, the brackets (PE1, PE2) being arranged on only one face of the enclosure (PE) is not restrictive either, where the brackets (PE1, PE2) can be arranged on the two faces of the enclosure (PE).

19. A method for manufacturing the element according to claim 1, comprising the steps of:
a. attaching (I1) the bars which will constitute the structural frame (11);
b. machining (I2) the insulating layer (12) to obtain the grooves and/or recesses (121E) for accommodating the structural frame (11), the grooves (121S) and (122S) for accommodating installations, and the recesses (124) and (125);
c. assembling (I2bis) the structural frame (11) on the grooves and/or recesses (121E) for accommodating the structural frame (11);
d. introducing (I7) ducts and wiring (IN) in the grooves (121S, 122S) for accommodating installations;
e. applying (I8), preferably by means of an adhesive (AD) and/or nuts and bolts to the first closure layer (C1);
f. flipping over (I6) the assembly obtained in step e);
g. adhering and/or screwing (I3) the second closure layer (C2) to the insulating layer (12) and of the assembly, where this second layer (C2) can be for the absorption of irregularities or a finishing coat.

20. A prefabricated panel (1') for forming false ceilings in buildings, **characterized in that** it comprises:
a structural frame (2') formed by a perimeter frame (2a") and longitudinal members (2b") and inner crosspieces (2c') interconnected together, and structural rods (11') to fasten the prefabricated panel (1') to a support outside the panel,
a tray (8') fastened to the structural framework (2'),
a first group of conduits with electric cables (7') arranged on the tray (8') and located at a first level (N1) with respect to the plane (P0) defined by the structural framework (2'),
a second group (6') of conduits arranged at a second level (N2) with respect to a plane (P0) defined by the structural framework (2'), and wherein at least one end of the conduits of the second group (6') extends until it is close to or reaches the same border of the structural framework (2'), in order to be able to be connected with the conduits of another adjacent prefabricated panel, and
**in that** the first level (N1) is at a distance to the plane (P0) defined by the structural framework (2') greater than the distance between the second level (N2) and said plane (P0).

21. The prefabricated panel (1') for forming false ceilings in buildings according to claim 20, **characterized in that** it further comprises a flat finishing slab (3') attached to the structural framework (2') and having an inner surface (3a') and an outer surface (3b'), wherein the outer surface (3b') forms the visible face of the prefabricated panel (1').

22. The prefabricated panel (1') for forming false ceilings in buildings according to claim 21, **characterized in that** it further comprises a panel made of thermal and/or sound insulating material (4') superimposed on the inner surface (3a') of the finishing slab (3').

23. The prefabricated panel (1') for forming false ceilings in buildings according to claim 21, **characterized in that** the finishing slab (3') has at least one opening (12') for the passage of conduits or electric cables to the outside of the panel.

24. The prefabricated panel for forming false ceilings in buildings according to claims 22 and 23, **characterized in that** panel made of insulating material (4') has at least one opening (13') superimposed with an opening (12') of the finishing slab (3') for the passage of conduits or electric cables.

25. The prefabricated panel (1') for forming false ceilings in buildings according to any of the preceding claims, **characterized in that** it further comprises a third group (5') of conduits arranged at a third level (N3) with respect to the plane defined by the structural framework (2'), and wherein the third level (N3) is at a smaller distance from the plane (P0) defined by the structural framework (2') than the second level (N2).

26. The prefabricated panel (1') for forming false ceilings in buildings according to claim 25, **characterized in that** the first, second, and third levels (N1, N2, N3) extend, respectively, in planes (P1, P2, P3) parallel to the plane (P0) defined by the structural framework (2').

27. The prefabricated panel (1') for forming false ceilings in buildings according to any of claims 22 to 26, **characterized in that** the panel made of thermal and/or sound insulating material (4') has at least one longitudinal channel (4a') and transverse channels (4b') that are intercommunicated, and **in that** the longitudinal members and crosspieces (2b', 2c) and the longitudinal and transverse channels (4a', 4b') are arranged and sized such that when the assembly formed by the finishing slab (3') and the panel made of insulating material (4'), are coupled to the structural frame (2'), the longitudinal and transverse channels (4a', 4b') fit in the longitudinal members and crosspieces (2b', 2c), such that the latter are housed in the longitudinal and transverse channels (4a', 4b').

28. The prefabricated panel (1') for forming false ceilings in buildings according to claim 27, **characterized in that** it incorporates a lattice (10') of longitudinal members (10a') and crosspieces (10b') interconnected together and made with a thermal and/or sound insulating material, which coincide with one another and are superimposed with the longitudinal members and crosspieces (2b', 2c) of the structural framework (2'), such that when the assembly formed by the finishing slab (3') and the panel made of insulating material (4') are coupled to the structural frame (2'), the longitudinal and transverse channels (4a', 4b') fit in the longitudinal members and crosspieces (10a, 10b), such that the latter are also housed in the longitudinal and transverse channels (4a',4b').

29. The prefabricated panel (1') for forming false ceilings in buildings according to any of claims 21 to 28, **characterized in that** the finishing slab (3') is made with one of the following materials: a plasterboard slab, wood, a mixture, metal, plastic, or a composite.

30. The prefabricated panel (1') for forming false ceilings in buildings according to any of claims 22 to 29, **characterized in that** the panel made of insulating material (4') is made of: extruded polystyrene, rock or mineral wool, cork, a mixture, or a composite.

31. The prefabricated panel (1') for forming false ceilings in buildings according to any of claims 22 to 30 **characterized in that** the finishing slab (3') and the panel made of thermal and/or sound insulating material (4') are attached to one another by means of an adhesive, and in turn they are both mechanically fastened to the structural framework (2').

32. The prefabricated panel (1') for forming false ceilings in buildings according to any of the preceding claims, **characterized in that** it has polygonal configuration.

33. The prefabricated panel (1') for forming false ceilings in buildings according to claim 32, **characterized in that** the prefabricated panel (1') has a parallelepiped shape or a triangular shape.

34. The prefabricated panel (1') for forming false ceilings in buildings according to any of the preceding claims, **characterized in that** the structural framework (2') is made with at least some of the following materials: metal, wood, plastic, a composite.

35. The prefabricated panel for forming false ceilings in buildings according to any of claims 25 to 34, **characterized in that** the conduits of any of the groups (5', 6', 7', 8', 9') of conduits are supported by the structural framework (2').
